# EUROPEAN PATENT SPECIFICATION

(11) **EP 3 926 153 B1**
(45) Date of publication and mention of the grant of the patent: **15.05.2024**
(21) Application number: 21180448.9
(22) Date of filing: 18.06.2021
(51) Int. Cl.: F01P 3/18, F28D 1/04, F01P 7/16, F01P 3/12, B60K 11/04, B60K 11/02

(54) **A CONDITIONING APPARATUS FOR AN ENGINE AND A CONTROL METHOD THEREOF**
WÄRMETAUSCHERANORDNUNG UND SEIN STEUERUNGSVERFAHREN FÜR EINEN VERBRENNUNGSMOTOR
ENSEMBLE D'ÉCHANGEURS DE CHALEUR ET PROCÉDÉ DE PILOTAGE ASSOCIÉ POUR UN MOTEUR À COMBUSTION INTERNE

(30) Priority: 19.06.2020 IT 202000014785; 22.10.2020 IT 202000025024
(43) Date of publication of application: 22.12.2021
(73) Proprietor: FPT Motorenforschung AG, 9320 Arbon (CH)
(72) Inventor: FESSLER, Harald, 9320 ARBON (CH)
(74) Representative: Studio Torta S.p.A.

(56) References cited:
- WO-A1-02/48516
- WO-A1-03/042619
- US-A- 4 061 187
- US-A- 4 620 509
- US-A- 5 353 757

## Description

### TECHNICAL FIELD

The invention concerns a conditioning apparatus for an engine, in particular a turbocharged engine.

The invention also concerns a method for controlling the aforementioned conditioning apparatus

### BACKGROUND OF THE INVENTION

Conditioning apparatuses for engines commonly include a first conditioning circuit to circulate coolant (e.g. water) from the engine coolant jacket to a radiator, where the coolant transfers the heat taken from the engine to ambient air.

Conditioning apparatuses also include a second conditioning circuit for cooling the charge air of the engine.

The second conditioning circuit usually includes a charge air cooler through which ambient air is directed to take heat from the charge air.

In some cases, the second conditioning circuit is an indirect conditioning circuit, in which a refrigerant, usually low temperature water is circulated from the charge air cooler to a further radiator, normally placed in front of the other radiator for the engine water.

In this context, a need is felt for an improvement of the known conditioning apparatuses, possibly in terms of reduction of components and/or increase of use flexibility and thus conditioning performances.

Furthermore, a need is felt to develop an appropriate control method to maximize the performances of the improved conditioning apparatuses.

Examples of known conditioning apparatuses are WO03/042619 A1, US5353757 A, US4620509 A, WO02/48516 A1 or US4061187.

An object of the invention is to satisfy at least one of the above needs, preferably in a simple and cost effective manner.

### SUMMARY OF THE INVENTION

The object is reached by a conditioning apparatus and a control method thereof as claimed in the appended set of claims.

Dependent claims set out particular embodiments of the disclosure.

### BRIEF DESCRIPTION OF DRAWINGS

For a better understanding of the invention, preferred embodiments are disclosed in the following, by way of non-limiting examples, with reference to the attached drawings wherein:
- Figure 1 is a scheme representing the layout of a conditioning apparatus according to an embodiment of the disclosure;
- Figure 2 is another scheme representing the layout of a conditioning apparatus according to a further embodiment of the disclosure.

### DETAILED DESCRIPTION OF THE INVENTION

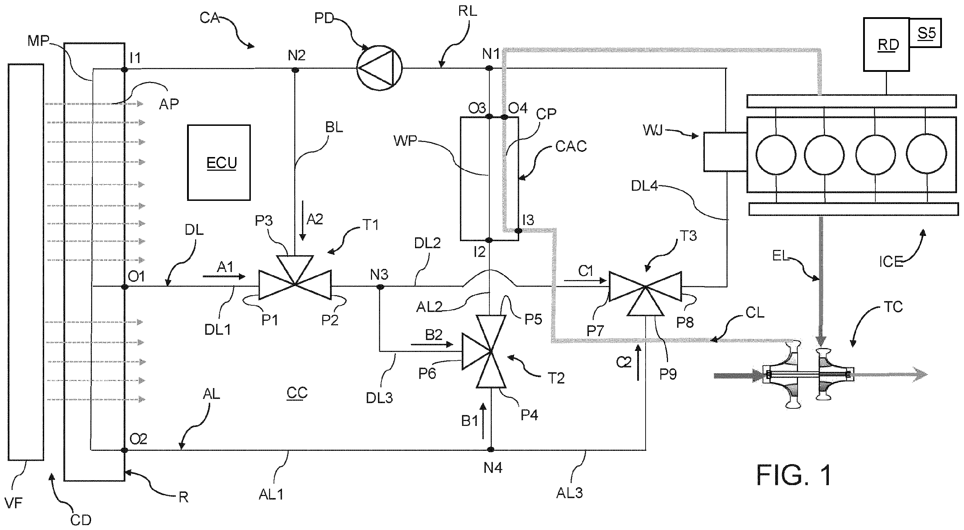

In figure 1, reference symbol CA indicates a conditioning apparatus for an engine ICE, in particular an internal combustion engine provided with a turbocharger TC.

Engine ICE is also provided with a retarder device RD, which is configured to slow down the engine ICE by dissipating the engine power into heat. Retarder device RD is a well-known device, whose operation will not be described in detail for reasons of conciseness.

Exhaust gases from engine ICE are directed to the turbocharger TC such that the enthalpy thereof is converted into mechanical work to compress the charge air.

Conditioning apparatus CA comprises:
- a conditioning device CD configured for cooling a medium, in particular water, (or a mixture of water and chemicals such as antifreeze and/or rust inhibitors) to a plurality of temperature levels;
- an engine jacket or block WJ defining a heat exchange zone between the medium and the engine ICE; and
- a charge air cooler CAC configured for cooling the charge air of engine ICE by means of the medium.

According to the invention, the conditioning device CD comprises a heat exchanger R, in particular a radiator, defining a path MP for the medium and another path AP for a further medium, specifically air and more specifically to be taken from the ambient.

Conditioning device CD further comprises one or more ventilation elements VF, e.g. fans, to suck or push air from the ambient and to force it along path AP.

More precisely, paths MP, AP are separated from one another but in thermal contact with one another to allow heat exchanges to occur between the two mediums advancing through the respective paths MP, AP.

Similarly, charge air cooler CAC internally defines two separated paths CP, WP in thermal communication with one another and respectively for the charge air of engine ICE and the medium, such that heat exchanges may occur between the medium and the charge air.

Path CP is connected to an output of the turbocharger TC through a charge air line CL provided to conduct the charge air compressed by the turbocharger TC through the charge air cooler CAC. Turbocharger TC heats ambient air by compressing it thanks to the mechanical work produced by the same turbocharger TC by converting the enthalpy of exhaust gases of engine ICE.

Engine ICE comprises an exhaust line EL connected to the turbocharger TC to supply the latter with the exhaust gases.

Conditioning apparatus CA further comprises a conditioning circuit CC, more precisely a cooling circuit, which allows the circulation of the medium through the engine jacket WJ and the conditioning device CD, more precisely through the path MP of heat exchanger R.

Conditioning circuit CC includes a delivery line DL configured to bring the medium from the conditioning device CD, i.e. from path MP of heat exchanger R, to the engine jacket WJ, i.e. toward the heat exchange zone defined therein.

Moreover, conditioning circuit CC includes also a return line RL configured to take heated medium from the engine jacket WJ and to supply such heated medium to the conditioning circuit CC.

In practice, the conditioning device CD or, more precisely, the heat exchanger R has an opening I1 that is connected to the return line RL to receive the heated medium, and a further opening O1 that is connected to the delivery line DL to allow a medium flowing through there toward the heat exchange zone in the engine jacket WJ.

In other words, the return line RL and the delivery line DL have respective ends connected to the heat exchanger R at the openings I1, O1, respectively. The other ends of the return line RL and the delivery line DL are both connected to the engine jacket WJ.

The openings I1, O1 define respectively an inlet and an outlet of the heat exchanger R; therefore, the medium flows within the heat exchanger R through path MP according to an advancing direction, namely from opening I1 towards opening O1.

Conditioning device CD receives the medium at opening I1 at a first temperature level as a function of the heat absorbed by the medium at the heat exchange zone defined by the engine jacket WJ. Moreover, conditioning device CD releases the received medium through the opening O1 at a second temperature level, which is lower than the first temperature level because the medium transfers heat to the further medium flowing through path AP.

Actually, conditioning device CD defines, in the embodiments shown, a cooling device for cooling the medium heated by the operation of engine ICE.

Conditioning device CD (more precisely, the heat exchanger R) comprises a further opening 02 in fluid communication with path MP placed downstream of the opening O1 according to the advancing direction of the medium within heat exchanger R.

Therefore, conditioning device CD is configured to release the medium through the opening 02 at a third temperature level lower than the second temperature level, that is the release temperature level of the medium at opening O1.

Indeed, the medium that reaches the opening 02 runs through a longer portion of path MP. Hence, a higher amount of heat is transferred to the further medium through path AP, compared to that transferred by the medium released through opening O1.

In other words, the medium released through opening 02 flows on a larger heat exchange surface than that on which the medium released through opening O1 flows. Opening 02 defines a second outlet for cooling device CD, more precisely for heat exchanger R.

The medium released through opening 02 is exploited to cool down the charge air of engine ICE. The conditioning circuit CC comprises, in fact, an additional line AL connecting the opening 02 to path WP within charge air cooler CAC. The same additional line AL connects path WP to the return line RL.

Hence, the additional line AL connects the opening 02 at one end to a node N1 of the return line RL at the other end, passing through charge air cooler CAC. Therefore, path WP is defined by a portion of the additional line AL.

Preferably, the return line RL comprises a pumping device PD, in particular a pump, for forcing the heated medium from the heat transfer zone, within engine jacket WJ, to opening I1. In the embodiments shown, pumping device PD is arranged downstream of the node N1, according to the advancing direction of the heated medium through the return line RL.

With greater detail, charge air cooler CAC has two openings 12, 03 defining the ends of path WP and respectively an inlet and an outlet for the charge air cooler CAC itself. Within the charge air cooler CAC, the medium advances along path WP from opening I2 to opening 03. As well, through the additional line AL, the medium flows from opening 02 to node N1.

Similarly for path WP, charge air cooler CAC has two openings 13, 04 defining the ends of path CP and respectively a further inlet and a further outlet for the charge air cooler CAC itself. Within charge air cooler CAC, the charge air advances along path CP from opening I3 to opening 04.

Conditioning apparatus CA is configured such that the amounts of medium, i.e. the flow rate released through openings 01, 02 is controlled.

Actually, the delivery line DL and the additional line AL respectively comprise adjusting assemblies T1, T2 that are respectively configured to control the flow through openings O1, 02 directed toward the engine jacket WJ and charge air cooler CAC.

With greater detail, the adjusting assemblies T1, T2 comprise each a flow regulating device, such as a thermostat or a valve, possibly electronically controllable; in the latter case, the conditioning apparatus CA would include also a control unit to electronically control the opening or closing of the flow regulating devices.

Actually, conditioning apparatus CA includes also a control unit ECU configured to control the opening or closing of the flow regulating devices.

For example, one of adjusting assemblies T1, T2 may consist of a flow regulating device having a single valve body or regulating body.

The delivery line DL includes two branches DL1, DL2 respectively upstream and downstream of the flow regulating device of adjusting assembly T1; as well, the additional line AL includes two branches AL1, AL2 respectively upstream and downstream of the flow regulating device of adjusting assembly T2.

From now on, expressions like "upstream of" and "downstream of" will be referred to the advancing direction of the medium, in use, through the relevant portion of conditioning circuit CC.

The flow regulating device of adjusting assembly T1 has a port P1 connected to branch DL1 and another port P2 connected to branch DL2 to respectively receive the flow of the medium from opening O1 and to let the medium flowing toward the engine jacket WJ.

Conveniently, the same flow regulating device comprises a further port P3; accordingly, the conditioning circuit CC further comprises a bypass line BL connecting the return line RL to the further port P3 and thus to delivery line DL, such that the heated medium flowing through the return line RL can bypass the conditioning device CD. In other words, port P3 is arranged to receive the flow of the medium through the bypass line BL.

Port P2 selectively communicates with ports P1, P3 to allow the advancing of the sum of the flows from branch DL1 and the bypass line BL toward the engine jacket WJ.

More precisely, the bypass line BL extends from a node N2 of the return line RL to the further port P3 of adjusting assembly T1. Preferably, node N2 is placed downstream of node N1 and conveniently downstream of pumping device PD.

Adjusting assembly T1 is configured to control the flow of medium through the bypass line BL together with the flow of medium through the openings I1, 01. The flow of medium through the port P2 connected with branch DL2 is the sum of the flows through the other ports P1, P3, namely the sum of the flow from opening O1 and from bypass line BL.

Therefore, the flow regulating device of adjusting assembly T1 is represented in figure 1 as a three-way valve, without loses of generality, although it may comprise two separate coordinated thermostats. The ports P1, P2, P3 of the adjusting assembly T1 communicate with each other in a selective manner due to the operation of the corresponding flow regulating device.

The flow regulating device of adjusting assembly T2 has a port P4 connected to branch AL1 and another port P5 connected to branch AL2 to respectively receive the flow of the medium from opening 02 and to let the medium flowing toward the charge air cooler CAC.

Conveniently, the same flow regulating device comprises a further port P6; accordingly, the delivery line DL further comprises a further branch DL3, in particular branching from branch DL2, which connects the same delivery line DL to the further port P6 and thus to additional line AL upstream of charge air cooler CAC, such that part of the flow through the delivery line DL can be redirected to charge air cooler CAC. In other words, port P6 is arranged to receive the flow of medium through branch DL3.

Port P5 selectively communicates with ports P4, P6 to allow the advancing of at least a portion of the sum of the flows of medium from opening 02 and branch DL3 toward the charge air cooler CAC through the additional line AL.

More precisely, the branch DL3 extends from a node N3 of the delivery line DL to the further port P6 of adjusting assembly T2.

Adjusting assembly T2 is configured to control the flow of the medium through the branch DL3 together with the flow of the medium through opening 02. Consequently, adjusting assembly T2 is also configured to control the flow of medium toward the engine jacket WJ.

In the embodiment of figure 1, the flow of medium through the port P5 connected with branch AL2 is the sum of the flows through the other ports P4, P6, namely the sum of the flow from branch DL3 and of at least a portion of the flow from opening 02.

Therefore, the flow regulating device of adjusting assembly T2 is represented in figure 1 as a three-way valve, without loses of generality, although it may comprise two separate coordinated thermostats.

Preferably, conditioning apparatus CA further comprises another adjusting assembly T3 configured to control the flow of the medium toward the engine jacket WJ.

Like adjusting devices T1, T2, adjusting assembly T3 comprises a flow regulating device, such as a thermostat or a valve, possibly electronically controllable, in particular by control unit ECU.

The delivery line DL includes a further branch DL4 downstream of the flow regulating device of adjusting assembly T3. More precisely, the latter flow regulating device is placed between branches DL2, DL4, in particular downstream of node N3.

Adjusting assembly T3 is configured to control the flow of medium through the branch DL4.

The flow regulating device of adjusting assembly T3 has a port P7 connected to branch DL2 and another port P8 connected to branch DL4 to respectively receive the flow of the medium from branch DL2 and to let the medium flowing toward the engine jacket WJ.

In particular, branch DL4 extends from the latter port P8 to engine jacket WJ.

Conveniently, the same flow regulating device comprises a further port P9; accordingly, the additional line AL further comprises a further branch AL3, in particular branching from branch AL1, which connects the same additional line AL to further port P9 and thus to the delivery line DL, such that part of the flow through the additional line AL can bypass the charge air cooler CAC. In other words, port P9 is arranged to receive the flow through branch AL3.

Port P8 selectively communicates with ports P7, P9 to allow the advancing of the sum of the flows from branches DL2, AL3 through the delivery line DL toward the engine jacket WJ.

More precisely, the branch AL3 extends from a node N4 of the additional line AL to the further port P9 of adjusting assembly T3. Node N4 is placed upstream of charge air cooler CAC and conveniently upstream of the flow regulating device of adjusting assembly T2.

Therefore, adjusting assembly T3 is configured to control the flow of the medium through the branch AL3 and consequently the flow of medium toward the charge air cooler CAC, in particular together with the flow of medium through branches DL2, DL3. In the embodiment of figure 1, the flow of medium through the port P8 connected with branch DL4 is the sum of the flows through the other ports P7, P9, namely the sum of the flows from branch DL2, in particular downstream of node N3, and from branch AL3.

Regarding the control of conditioning apparatus CA, control unit ECU is configured to control the flow regulating devices of adjusting assemblies T1, T2, T3, based on information acquired from one or more sensors making part of conditioning apparatus CA itself.

In particular, conditioning apparatus CA comprises a sensor or transducer S5 configured to detect the status of the retarder device RD, in particular to sense if the retarder device RD is turned on or turned off.

Sensor S5 may be merely an electric contact, which closes when the retarder device RD is turned on.

Control unit ECU is configured to acquire information from sensor S5 to determine if the retarder device RD is turned on.

When the retarder device RD is turned on, it is desirable that the engine jacket WJ receives the medium at the lowest possible temperature, such that the generated heat may be rapidly dispersed.

Here, control unit ECU controls the flow regulating devices such that a flow of medium is allowed from opening 02 to the engine jacket WJ and the flow of medium from opening 02 to the charge air cooler CAC is inhibited. In this manner, the entire coldest medium flowing through opening 02 is completely redirected to engine jacket WJ.

Furthermore, preferably, control unit ECU controls the flow regulating devices such that the flow of medium from opening O1 and from bypass line BL to the engine jacket WJ is inhibited.

In this case, a flow of the medium through the bypass line BL may be still allowed and then entirely redirected through charge air cooler CAC by means of control unit ECU controlling the flow regulating devices (in particular the ones of adjusting assemblies T1, T2, T3) accordingly. Here, control unit ECU controls the flow regulating devices of adjusting assembly T1 to allow the flow of the medium through the bypass line BL and to inhibit the flow of the medium from opening O1 to branch DL2. Control unit ECU is configured to control the flow regulating devices in the latter disclosed manner while the same control unit ECU determines that turbocharger TC provides no boost to the charge air and the retarder device RD is turned on. For example, control unit ECU may be configured to control the operation of turbocharger TC and/ or to determine that turbocharger TC provides no boost by extracting information from a sensor (not shown) for detecting operative conditions of turbocharger TC. When the turbocharger TC provides no boost during the operation of the retarder device RD, the flow of charge air through charge air cooler CAC is used for cooling the medium circulating through the conditioning circuit CC.

With greater detail, the medium flowing through the bypass line BL is admitted through branch DL2, specifically via ports P3 and P2 while port P1 does not communicate with the same ports P3, P2. Then, no flow is admitted through port P7 and accordingly the entire flow of medium flows through branch DL3. The latter flow is directed through branch AL2, specifically via ports P6, P5 while port P4 does not communicate with the same ports P6, P5.

The operation of conditioning apparatus CA depends on the operation of the adjusting assemblies T1, T2, T3.

Adjusting assembly T1 may allow a flow A1 from opening O1 to engine jacket WJ and/or a flow A2 from the return line LR to the engine jacket WJ, such that conditioning device CD is bypassed.

When flow A1 is not allowed and flow A2 is allowed, the medium circulate through the engine jacket WJ without undergoing any cooling process. This situation is appropriate, e.g. during a warm up condition of the engine ICE, in which a raise of the engine temperature is favorable.

In some embodiments, adjusting assembly T1 may adjust the dimensions of the flows A1, A2, e.g. by partially or completely obstructing the ports P1, P3 of the corresponding flow regulating device. In this manner, the temperature of engine ICE may be controlled over a continuous range of values. This holds for flow A1 independently from the presence of the bypass line BL and of the corresponding further port P3, i.e. independently of the possibility of having flow A2.

Adjusting assembly T2 may allow a flow B1 from opening 02 to charge air cooler CAC and/or a flow B2 from opening O1. When only flow B1 is allowed, the temperature of the charge air is lower than when flow B2 is also allowed. A maximum temperature of the charge air may be obtained allowing only flow B2, especially when flow A1 is not allowed. In this latter case, heat losses to the ambient are minimized, especially in combination with bypassed heat exchanger R, which means that only flow A2 is allowed. This is particularly appropriate during warm up of engine ICE. Furthermore, since the temperature of the charge air influences the temperature of the exhaust gases from engine ICE, adjusting flows B1 and B2 is suitable for controlling the latter temperature, in particular based on possible specific needs of an after treatment system (not shown) associated to exhaust line EL.

In some embodiments, adjusting assembly T2 may adjust the dimensions of the flows like adjusting assembly T1. In this manner, the temperature of the charge air may be controlled over a continuous range of values. This holds for flow B1 independently from the presence of the branch DL3 and of the corresponding further port P6, i.e. independently of the possibility of having flow B2.

Adjusting assembly T3 may allow a flow C1 from opening O1 to engine jacket WJ and/or a flow C2 from opening 02 to engine jacket WJ. When the flow C1 is not allowed, the flow from opening O1 might be redirected to charge air cooler CAC. When the flow C2 is allowed, some of the flow from opening 02 is used for an extra cooling of engine ICE, while charge air cooling CAC is supplied with less medium. This condition is appropriate when high engine cooling is required, e.g. during engine braking, while heat rejection of the charge air is low.

Furthermore, for example, conditioning apparatus CA may be used for conditioning the retarder device RD associated to engine ICE and having an own jacket connected to engine jacket WJ, e.g. through the conditioning circuit CC, to receive the medium. In this case, a lower temperature of the medium is appropriate during the operation of the retarder device. Here, the flow C2 is advantageously allowed (preferably maximized) during such an operation.

In some embodiments, adjusting assembly T3 may adjust the dimensions of the flows like adjusting assemblies T1, T2. In this manner, the control of both the temperature of the charge air and engine ICE may be controlled with an additional degree of freedom. In some other embodiments, the flow C1 may be always allowed in full, which means that port P7 remains always unobstructed.

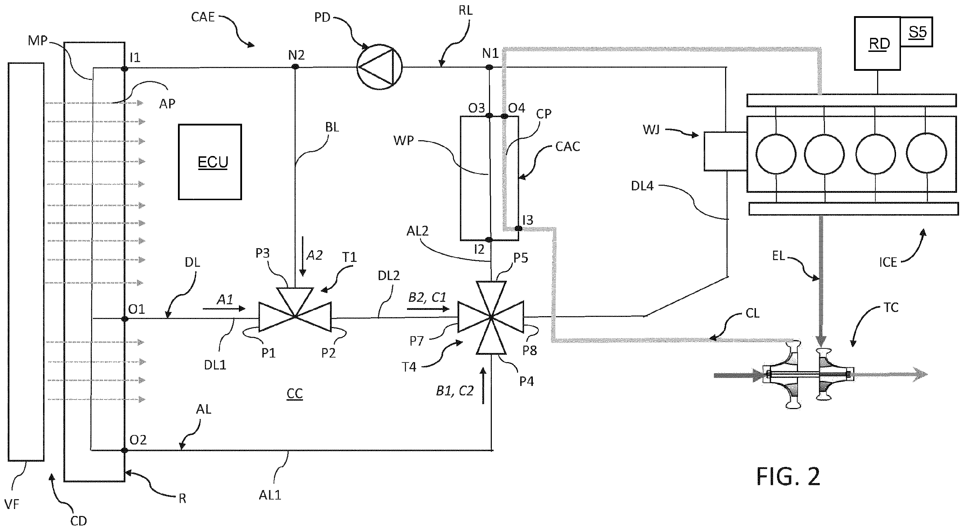

Figure 2 shows a conditioning apparatus CAE according to a similar embodiment to that shown in figure 1. In view of such a similarity, conditioning apparatus CAE will be described only insofar it differs from conditioning apparatus CA. Where possible, the same reference symbols will be used to indicate equivalent components.

Conditioning apparatus CAE differs from conditioning apparatus CA for the absence of branches DL3 and AL3 and for the replacement of the adjusting assemblies T2, T3 with an adjusting assembly T4. Therefore, conditioning apparatus CAE shows a reduced number of components and is in this sense simpler than conditioning apparatus CA.

The adjusting assembly T4 has a flow regulating device with four ports having the same role of ports P4, P5, P7, P8 and thus indicated with the same reference symbols. Ports P4, P7 respectively receive flows from branches AL2, DL2, whereas ports P5, P8 respectively let the medium flowing toward charge air cooler CAC and engine jacket WJ.

Port P8 selectively communicates with ports P4, P7 to allow the advancing of at least a portion of the sum of the flows from opening 02 and branch DL2 through branch DL4 toward the engine jacket WJ.

The flow regulating device of adjusting assembly T4 is configured to control the flows of the medium through opening 02 and through branch DL2. Moreover, the same flow regulating device controls the flows toward charge air cooling device CAC and engine jacket WJ as respective portions of the sum of the flows received from opening 02 and branch DL2.

The latter flow regulating device is configured to control the dimensions of the latter portions.

In particular, the flow regulating device includes a four way control valve configured to control the above four flows.

Ports P4, P5, P7, P8 communicates to each other in a selective manner. For example, the flow regulating device is configured to partially or totally obstruct each of ports P4, P5, P7, P8.

The operation of the conditioning apparatus CAE is similar to that of conditioning apparatus CA. The only difference is relative to the operation of the adjusting assembly T4, in replacement of adjusting assemblies T2, T3.

The operation of the adjusting assembly T4 is typical of the common four way control valves; therefore, the latter operation will not be described in detail.

Adjusting assembly T4 allows the four flows B1, B2, C1, C2 as the combination of adjusting assemblies T2, T3.

In the following, a method for controlling or operating the conditioning apparatuses CA, CAE will be described. This method may be carried out by control unit ECU in both conditioning apparatuses CA, CAE.

The method according to the invention, which is here indicated for simplicity as retarder mode, comprises the following steps:
- determining if the retarder device RD is turned on or turned off;
- controlling the flow regulating devices to allow the flow C2 when the retarder device RD is determined to be turned on;
- controlling the flow regulating devices to inhibit the flow B1 when the retarder device is determined to be turned on; and
- preferably controlling the regulating devices to inhibit the flow C1 and/or the flow A1 when the retarder device is determined to be turned on.

In view of the foregoing, the advantages of conditioning apparatuses CA, CAE and of the method according to the invention are apparent.

In particular, a very high use flexibility of the conditioning apparatuses CA, CAE is apparent due to the possibility of controlling the temperatures of the charge air and of engine ICE based on the operating conditions of the latter.

Especially, conditioning apparatus CAE allows a complete bypass of charge air cooler CAC to maximize cooling of engine ICE, in particular during engine braking, and of possible associated devices like a retarder device. When no boost is provided by turbocharger TC, the charge air cooler CAC can receive the flow of medium from the bypass line in order to cool down the same medium using the charge air flow as an additional cooling medium.

A single heat exchanger with two outlets, i.e. openings O1, O2, is provided for cooling just one medium to different temperature levels, which allows for the flexible cooling of both the charge air and engine ICE.

The energy generated by engine ICE in the form of heat can be kept within the conditioning apparatuses CA, CAC during a cold start of engine by inhibiting both flows A1 and B1. This permits a fast warm up of engine ICE.

The cooling capacity of conditioning device DC is fully exploited by redirecting the colder portion of the medium toward the charge air cooler CAC. According to known solutions, on the other hand, the cooling capacity is maintained high to address an extra cooling need given by engine braking, but this high cooling capacity cannot be exploited during normal operation of the engine.

Moreover, the complete cooling capacity of conditioning device CD can be exploited to maximize cooling of the charge air when high boost is appropriate.

Preferably, when conditioning apparatuses CA, CAC are used for cooling the retarder device RD, such a device can have a higher braking power than usual due to the higher cooling capacities of conditioning apparatuses CA, CAC.

Furthermore, conditioning apparatuses CA, CAC essentially have components that are already used in known apparatuses, though in a less flexible manner. Therefore, conditioning apparatuses CA, CAE are simple to be carried out in a cost effective manner.

With respect to known apparatuses, the number of components is even reduced due to the connection of the heat exchanger R and charge air cooler CAC to the same conditioning circuit CC. In particular, indirect cooling of the charge air is reached without the need of a further heat exchanger.

Finally, it is clear that modifications can be made to the described conditioning apparatuses CA, CAE, which do not extend beyond the scope of protection defined by the claims.

For example, the embodiments of figures 1 and 2 may be combined into an embodiment where all the adjusting assemblies T2, T3, T4 are present. Adjusting assembly T1 may be entirely absent if at least one of adjusting assembly T3 and T4 is present. As well, other components disclosed as preferred components have to be regarded as optional and thus removable.

Moreover, the scheme of the lines of conditioning circuit CC may be different from that illustrated in figures 1 and 2. In an example being not in accordance with the invention, the conditioning device CD might be different from a common heat exchanger and might include, for instance, a plurality of communicating refrigerated cells.

## Claims

1. A conditioning apparatus (CA; CAE) for an engine (ICE) comprising:
- a conditioning device (CD) comprising a heat exchanger for cooling a medium to a plurality of temperature levels, said conditioning device (CD) having a first opening (11) for receiving the medium at a first temperature level and a second opening (01) to release the medium at a second temperature level lower than the first temperature level, the heat exchanger defining a path for the medium and a path for a further medium;
- a delivery line (DL) connected to the second opening (O1) to bring the medium in thermal contact with the engine (ICE) at a heat exchange region (WJ) and comprising first adjusting means (T1) to control a first flow (A1) of the medium from the second opening (01) toward the heat exchange region (WJ);
- a return line (RL) connected to the first opening (11) to supply the conditioning device (CD) with the medium brought in thermal contact with the engine (ICE) at the heat exchanging region (WJ); and
- a charge air cooler (CAC) for cooling an intake air flow of the engine (ICE) by means of the medium;
wherein the conditioning device (CD) has a third outlet (02) to release the medium at a third temperature level lower than the second temperature level, said apparatus comprising an additional line (AL) to conduct the medium from the third opening (02) to the return line (RL);
the additional line (AL) passing through the charge air cooler (CAC) and comprising second adjusting means (T2; T4) to control a second flow (B1; B1, C2) of the medium from the third opening (02) toward the charge air cooler (CAC)
**characterized in that** the delivery line (DL) comprises a first branch (DL3; DL2) connecting to the additional line (AL) upstream of the charge air cooler (CAC) according to the direction of the second flow (B1; B1, C2);
and wherein said second adjusting means (T2; T4) comprise a second flow regulating device configured to control said second flow (B1; B1, C2) and a fourth flow (B2; B2, C1) of the medium from the first branch (DL3; DL2) toward the air charge cooler (CAC);
the second flow regulating device (T2; T4) having a fourth port (P4) arranged to receive the second flow (B1) from the third opening, a fifth port (P6; P7) arranged to receive the fourth flow (B2) from said first branch (DL3; DL2), and a sixth port (P5) selectively communicating with the fourth (P4) and the fifth port (P6; P7) to allow the advancing of at least a first portion of the sum of the second flow (B1; B1, C2) and the fourth flow (B2; B2, C1) through the additional line (AL) toward the charge air cooler (CAC).

2. The conditioning apparatus of claim 1, further comprising a first bypass line (BL) that connects the return line (RL) to the delivery line (DL), such that the medium flowing through the return line (RL) is allowed to bypass the conditioning device (CD);
wherein said first adjusting means (T1) comprise a first flow regulating device configured to control said first flow (A1) and a third flow (A2) of the medium through the first bypass line (BL);
the first flow regulating device having a first port (P1) arranged to receive the first flow (A1) from the second opening (O2), a second port (P3) arranged to receive the third flow (A2) from the first bypass line (BL), and a third port (P2) selectively communicating with the first and the second port (P1, P3) to allow the advancing of the sum of the first flow (A1) and the third flow (A2) through the delivery line (DL) toward the heat exchange region (WJ).

3. The conditioning apparatus of claim 1 or 2, wherein the delivery line (DL) comprises a second branch (DL4) connecting to the additional line (AL) upstream of the charge air cooler (CAC) according to the direction of the second flow (B1);
and wherein said second flow regulating device comprise a seventh port (P8) selectively communicating with the fourth and the fifth port (P4, P7) to allow the advancing of at least a second portion of the sum of the second flow (B1; B1, C2) and the fourth flow (B2; B2, C1) through the second branch (DL4) toward the heat exchanging region (WJ);
said second flow regulating device being configured to control the dimension of the first and the second portion.

4. The conditioning apparatus of any of the preceding claims, wherein the delivery line (DL) comprises a second branch (DL4) connecting to the additional line (AL) upstream of the charge air cooler (CAC) according to the direction of the second flow (B1) and connecting said first branch (DL2) to said heat exchange region (WJ);
said apparatus comprising a third flow regulating device, which is defined by the second flow regulating device and is configured to control a fifth flow (C1) of the medium from said first branch (DL2) to said second branch (DL4) and a sixth flow (C2) of the medium from the additional line (AL1) to said second branch (DL4).

5. The conditioning apparatus of any of the foregoing claims, wherein the delivery line (DL) comprises a third branch (DL2) and a third flow regulating device (T3) configured to control a fifth flow (C1) of the medium from the third branch (DL2) toward the heat exchange region (WJ);
said apparatus comprising a second bypass line (AL3) that connects the additional line (AL) to the third branch (DL2), such that the medium flowing through the additional line (AL) is allowed to bypass said charge air cooler (CAC);
wherein the third flow regulating device (T3) is further configured to control a sixth flow (C2) of the medium from the second bypass line (AL3) toward the heat exchange region (WJ);
the third flow regulating device (T3) having a eighth port (P7) arranged to receive the fifth flow (C1) from the third branch (DL2), a ninth port (P9) arranged to receive the sixth flow (C2) from the second bypass line (AL3), and a tenth port (P8) selectively communicating with the eighth and the ninth port (P7, P9) to allow the advancing of the sum of the fifth flow and the sixth flow (C1, C2) through the delivery line (DL) toward the heat exchange region (WJ).

6. The conditioning apparatus of claim 4 or 5, further comprising a sensor (S5) connectable to a retarder device (RD) coupled to the engine (ICE) for sensing if the retarder device is turned on or turned off and a control unit (ECU) configured to
- acquire information from the sensor to determine if the retarder device is turned on;
- controlling the third flow regulating device to allow the sixth flow (C2) when the retarder device (RD) is determined to be turned on;
- controlling the second flow regulating device to inhibit the flow of medium from the third opening (02) to the charge air cooling device (CAC) when the retarder device (RD) is determined to be turned on.

7. The conditioning apparatus of claim 6, wherein the control unit (ECU) is further configured to controlling the third flow regulating device and/or the first flow regulating device to respectively inhibit the fifth flow (C1) and/or the first flow (A1) when the retarder device (RD) is determined to be turned on.

8. A method for controlling a conditioning apparatus according to claim 4 or 5, the method comprising:
- determining if a retarder device (RD) coupled to the engine (ICE) is turned on or turned off;
- controlling the third flow regulating device to allow the sixth flow (C2) when the retarder device (RD) is determined to be turned on;
- controlling the second flow regulating device to inhibit the flow of medium from the third opening (02) to the charge air cooling device (CAC) when the retarder device (RD) is determined to be turned on.

9. The method of claim 8, further comprising
- controlling the third flow regulating device and/or the first flow regulating device to respectively inhibit the fifth flow (C1) and/or the first flow (A1) when the retarder device (RD) is determined to be turned on.

## Patentansprüche

1. Kühlungsvorrichtung (CA; CAE) für eine Kraftmaschine (ICE), die Folgendes umfasst:
- eine Kühlungseinrichtung (CD), die einen Wärmetauscher zum Kühlen eines Mediums zu mehreren Temperaturniveaus umfasst, wobei die Kühlungseinrichtung (CD) eine erste Öffnung (I1) zum Aufnehmen des Mediums bei einem ersten Temperaturniveau und eine zweite Öffnung (O1), um das Medium bei einem zweiten Temperaturniveau freizugeben, das niedriger als das erste Temperaturniveau ist, aufweist, wobei der Wärmetauscher einen Pfad für das Medium und einen Pfad für ein weiteres Medium definiert;
- eine Übergabeleitung (DL), die mit der zweiten Öffnung (O1) verbunden ist, um das Medium mit der Kraftmaschine (ICE) in einem Wärmeaustauschbereich (WJ) in Wärmekontakt zu bringen, und erste Einstellmittel (T1) umfasst, um einen ersten Strom (A1) des Mediums von der zweiten Öffnung (O1) zum Wärmeaustauschbereich (WJ) zu steuern;
- eine Rückführungsleitung (RL), die mit der ersten Öffnung (I1) verbunden ist, um die Kühlungseinrichtung (CD) mit dem Medium zu versorgen, das mit der Kraftmaschine (ICE) im Wärmeaustauschbereich (WJ) in Wärmekontakt gebracht wurde; und
- einen Ladeluftkühler (CAC) zum Kühlen eines Einlassluftdurchflusses der Kraftmaschine (ICE) mittels des Mediums; wobei
die Kühlungseinrichtung (CD) einen dritten Auslass (O2) aufweist, um das Medium bei einem dritten Temperaturniveau, das niedriger als das zweite Temperaturniveau ist, freizugeben, wobei die Vorrichtung eine zusätzliche Leitung (AL) umfasst, um das Medium von der dritten Öffnung (O2) zur Rückführungsleitung (RL) zu leiten;
die zusätzliche Leitung (AL) den Ladeluftkühler (CAC) durchläuft und zweite Einstellmittel (T2; T4) umfasst, um einen zweiten Strom (B1; B1, C2) des Mediums von der dritten Öffnung (O2) zum Ladeluftkühler (CAC) zu steuern,
**dadurch gekennzeichnet, dass** die Übergabeleitung (DL) eine erste Verzweigung (DL3; DL2) umfasst, die eine Verbindung zu der zusätzlichen Leitung (AL) stromaufwärts des Ladeluftkühlers (CAC) gemäß der Richtung des zweiten Stroms (B1; B1, C2) herstellt; und
die zweiten Einstellmittel (T2; T4) eine zweite Strömungsregulierungseinrichtung umfassen, die konfiguriert ist, den zweiten Strom (B1; B1, C2) und einen vierten Strom (B2; B2, C1) des Mediums von der ersten Verzweigung (DL3; DL2) zum Luftladekühler (CAC) zu steuern; wobei
die zweite Strömungsregulierungseinrichtung (T2; T4) einen vierten Anschluss (P4), der ausgelegt ist, den zweiten Strom (B1) von der dritten Öffnung aufzunehmen, einen fünften Anschluss (P6; P7), der ausgelegt ist, den vierten Strom (B2) von der ersten Verzweigung (DL3; DL2) aufzunehmen, und einen sechsten Anschluss (P5), der mit dem vierten (P4) und dem fünften Anschluss (P6; P7) wahlweise kommuniziert, um das Befördern mindestens eines ersten Teils der Summe des zweiten Stroms (B1; B1, C2) und des vierten Stroms (B2; B2, C1) durch die zusätzliche Leitung (AL) zum Ladeluftkühler (CAC) zu ermöglichen, aufweist.

2. Kühlungsvorrichtung nach Anspruch 1, die ferner eine erste Umgehungsleitung (BL) umfasst, die die Rückführungsleitung (RL) mit der Übergabeleitung (DL) derart verbindet, dass dem Medium, das durch die Rückführungsleitung (RL) strömt, ermöglicht wird, die Kühlungseinrichtung (CD) zu umgehen; wobei
die ersten Einstellmittel (T1) eine erste Strömungsregulierungseinrichtung umfassen, die konfiguriert ist, den ersten Strom (A1) und einen dritten Strom (A2) des Mediums durch die erste Umgehungsleitung (BL) zu steuern; und
die erste Strömungsregulierungseinrichtung einen ersten Anschluss (P1), der ausgelegt ist, den ersten Strom (A1) von der zweiten Öffnung (O2) aufzunehmen, einen zweiten Anschluss (P3), der ausgelegt ist, den dritten Strom (A2) von der ersten Umgehungsleitung (BL) aufzunehmen, und einen dritten Anschluss (P2), der mit dem ersten und dem zweiten Anschluss (P1, P3) wahlweise kommuniziert, um das Befördern der Summe des ersten Stroms (A1) und des dritten Stroms (A2) durch die Übergabeleitung (DL) zum Wärmeaustauschbereich (WJ) zu ermöglichen, aufweist.

3. Kühlungsvorrichtung nach Anspruch 1 oder 2, wobei die Übergabeleitung (DL) eine zweite Verzweigung (DL4) umfasst, die eine Verbindung zu der zusätzlichen Leitung (AL) stromaufwärts des Ladeluftkühlers (CAC) gemäß der Richtung des zweiten Stroms (B 1) herstellt; wobei
die zweite Strömungsregulierungseinrichtung einen siebten Anschluss (P8) umfasst, der mit dem vierten und dem fünften Anschluss (P4, P7) wahlweise kommuniziert, um das Befördern mindestens eines zweiten Teils der Summe des zweiten Stroms (B1, B1; C2) und des vierten Stroms (B2; B2, C1) über die zweite Verzweigung (DL4) zum Wärmeaustauschbereich (WJ) zu ermöglichen; und
die zweite Strömungsregulierungseinrichtung konfiguriert ist, die Größenordnung des ersten und des zweiten Teils zu steuern.

4. Kühlungsvorrichtung nach einem der vorhergehenden Ansprüche, wobei die Übergabeleitung (DL) eine zweite Verzweigung (DL4) umfasst, die eine Verbindung zu der zusätzlichen Leitung (AL) stromaufwärts des Ladeluftkühlers (CAC) gemäß der Richtung des zweiten Stroms (B1) herstellt und die erste Verzweigung (DL2) mit dem Wärmeaustauschbereich (WJ) verbindet; wobei
die Vorrichtung eine dritte Strömungsregulierungseinrichtung umfasst, die durch die zweite Strömungsregulierungseinrichtung definiert ist und konfiguriert ist, einen fünften Strom (C1) des Mediums von der ersten Verzweigung (DL2) zur zweiten Verzweigung (DL4) und einen sechsten Strom (C2) des Mediums von der zusätzlichen Leitung (AL1) zur zweiten Verzweigung (DL4) zu steuern.

5. Kühlungsvorrichtung nach einem der vorhergehenden Ansprüche, wobei die Übergabeleitung (DL) eine dritte Verzweigung (DL2) und eine dritte Strömungsregulierungseinrichtung (T3), die konfiguriert ist, einen fünften Strom (C1) des Mediums von der dritten Verzweigung (DL2) zum Wärmeaustauschbereich (WJ) zu steuern, umfasst; wobei
die Vorrichtung eine zweite Umgehungsleitung (AL3) umfasst, die die zusätzliche Leitung (AL) mit der dritten Verzweigung (DL2) derart verbindet, dass dem Medium, das durch die zusätzliche Leitung (AL) strömt, ermöglicht wird, den Ladeluftkühler (CAC) zu umgehen;
die dritte Strömungsregulierungseinrichtung (T3) ferner konfiguriert ist, einen sechsten Strom (C2) des Mediums von der zweiten Umgehungsleitung (AL3) zum Wärmeaustauschbereich (WJ) zu steuern; und
die dritte Strömungsregulierungseinrichtung (T3) einen achten Anschluss (P7), der ausgelegt ist, den fünften Strom (C1) von der dritten Verzweigung (DL2) aufzunehmen, einen neunten Anschluss (P9), der ausgelegt ist, den sechsten Strom (C2) von der zweiten Umgehungsleitung (AL3) aufzunehmen, und einen zehnten Anschluss (P8), der mit dem achten und dem neunten Anschluss (P7, P9) wahlweise kommuniziert, um das Befördern der Summe des fünften Stroms und des sechsten Stroms (C1, C2) durch die Übergabeleitung (DL) zum Wärmeaustauschbereich (WJ) zu ermöglichen, aufweist.

6. Kühlungsvorrichtung nach Anspruch 4 oder 5, die ferner einen Sensor (S5), der mit einer Verzögerereinrichtung (RD), die an die Kraftmaschine (ICE) gekoppelt ist, verbunden werden kann, um zu erfassen, ob die Verzögerereinrichtung eingeschaltet oder ausgeschaltet ist, und eine Steuereinheit (ECU) umfasst, die konfiguriert ist zum:
- Erfassen von Informationen vom Sensor, um zu bestimmen, ob die Verzögerereinrichtung eingeschaltet ist;
- Steuern der dritten Strömungsregulierungseinrichtung, um den sechsten Strom (C2) zu ermöglichen, wenn bestimmt wird, dass die Verzögerereinrichtung (RD) eingeschaltet ist; und
- Steuern der zweiten Strömungsregulierungseinrichtung, um den Strom eines Mediums von der dritten Öffnung (O2) zur Ladungsluftkühleinrichtung (CAC) zu hemmen, wenn bestimmt wird, dass die Verzögerereinrichtung (RD) eingeschaltet ist.

7. Kühlungsvorrichtung nach Anspruch 6, wobei die Steuereinheit (ECU) ferner konfiguriert ist, die dritte Strömungsregulierungseinrichtung und/oder die erste Strömungsregulierungseinrichtung zu steuern, jeweils den fünften Strom (C1) und/oder den ersten Strom (A1) zu hemmen, wenn bestimmt wird, dass die Verzögerereinrichtung (RD) eingeschaltet ist.

8. Verfahren zum Steuern einer Kühlungsvorrichtung nach Anspruch 4 oder 5, wobei das Verfahren Folgendes umfasst:
- Bestimmen, ob eine Verzögerereinrichtung (RD), die an die Kraftmaschine (ICE) gekoppelt ist, eingeschaltet oder ausgeschaltet ist;
- Steuern der dritten Strömungsregulierungseinrichtung, den sechsten Strom (C2) zu ermöglichen, wenn bestimmt wird, dass die Verzögerereinrichtung (RD) eingeschaltet ist; und
- Steuern der zweiten Strömungsregulierungseinrichtung, den Strom eines Mediums von der dritten Öffnung (O2) zur Ladungsluftkühleinrichtung (CAC) zu hemmen, wenn bestimmt wird, dass die Verzögerereinrichtung (RD) eingeschaltet ist.

9. Verfahren nach Anspruch 8, das ferner Folgendes umfasst:
- Steuern der dritten Strömungsregulierungseinrichtung und/oder der ersten Strömungsregulierungseinrichtung, den fünften Strom (C1) und/oder den ersten Strom (A1) jeweils zu hemmen, wenn bestimmt wird, dass die Verzögerereinrichtung (RD) eingeschaltet ist.

## Revendications

1. Appareil de conditionnement (CA ; CAE) pour un moteur (ICE) comprenant :
- un dispositif de conditionnement (CD) comprenant un échangeur de chaleur pour refroidir un milieu à une pluralité de niveaux de température,
ledit dispositif de conditionnement (CD) ayant une première ouverture (I1) pour recevoir le milieu à un premier niveau de température et une deuxième ouverture (O1) pour libérer le milieu à un deuxième niveau de température inférieur au premier niveau de température, l'échangeur de chaleur définissant un chemin pour le milieu et un chemin pour un autre milieu ;
- une conduite de distribution (DL) raccordée à la deuxième ouverture (O1) pour amener le milieu en contact thermique avec le moteur (ICE) au niveau d'une région d'échange de chaleur (WJ) et comprenant de premiers moyens d'ajustement (T1) pour commander un premier écoulement (A1) du milieu à partir de la deuxième ouverture (O1) vers la région d'échange de chaleur (WJ) ;
- une conduite de retour (RL) raccordée à la première ouverture (I1) pour fournir au dispositif de conditionnement (CD) le milieu amené en contact thermique avec le moteur (ICE) au niveau de la région d'échange de chaleur (WJ) ; et
- un refroidisseur d'air de suralimentation (CAC) pour refroidir un écoulement d'air d'admission du moteur (ICE) au moyen du milieu ;
dans lequel le dispositif de conditionnement (CD) a une troisième sortie (02) pour libérer le milieu à un troisième niveau de température inférieur au deuxième niveau de température, ledit appareil comprenant une conduite supplémentaire (AL) pour conduire le milieu de la troisième ouverture (02) à la conduite de retour (RL) ;
la conduite supplémentaire (AL) passant à travers le refroidisseur d'air de suralimentation (CAC) et comprenant de deuxièmes moyens d'ajustement (T2 ; T4) pour commander un deuxième écoulement (B1 ; B1, C2) du milieu à partir de la troisième ouverture (02) vers le refroidisseur d'air de suralimentation (CAC)
**caractérisé en ce que** la conduite de distribution (DL) comprend une première dérivation (DL3 ; DL2) raccordée à la conduite supplémentaire (AL) en amont du refroidisseur d'air de suralimentation (CAC) selon la direction du deuxième écoulement (B1 ; B1, C2) ;
et dans lequel lesdits deuxièmes moyens d'ajustement (T2 ; T4) comprennent un deuxième dispositif de régulation d'écoulement configuré pour commander ledit deuxième écoulement (B1 ; B1 ; C2) et un quatrième écoulement (B2 ; B2, C1) du milieu à partir de la première dérivation (DL3 ; DL2) vers le refroidisseur d'air de suralimentation (CAC) ;
le deuxième dispositif de régulation d'écoulement (T2 ; T4) ayant un quatrième orifice (P4) agencé pour recevoir le deuxième écoulement (B1) à partir de la troisième ouverture, un cinquième orifice (P6 ; P7) agencé pour recevoir le quatrième écoulement (B2) à partir de ladite dérivation (DL3 ; DL2), et un sixième orifice (P5) communiquant sélectivement avec le quatrième (P4) et le cinquième orifice (P6 ; P7) pour permettre l'avancée d'au moins une première partie de la somme du deuxième écoulement (B1 ; B1, C2) et du quatrième écoulement (B2 ; B2, C1) à travers la conduite supplémentaire (AL) vers le refroidisseur d'air de suralimentation (CAC).

2. Appareil de conditionnement selon la revendication 1, comprenant en outre une première conduite de dérivation (BL) qui raccorde la conduite de retour (RL) à la conduite de distribution (DL), de sorte que le milieu s'écoulant à travers la conduite de retour (RL) puisse contourner le dispositif de conditionnement (CD) ;
dans lequel lesdits moyens d'ajustement (T1) comprennent un premier dispositif de régulation d'écoulement configuré pour commander ledit premier écoulement (A1) et un troisième écoulement (A2) du milieu à travers la première conduite de dérivation (BL) ;
le premier dispositif de régulation d'écoulement ayant un premier orifice (P1) agencé pour recevoir le premier écoulement (A1) à partir de la deuxième ouverture (O2), un deuxième orifice (P3) agencé pour recevoir le troisième écoulement (A2) à partir de la conduite de dérivation (BL), et un troisième orifice (P2) communiquant sélectivement avec le premier et le deuxième orifice (P1, P3) pour permettre l'avancée de la somme du premier écoulement (A1) et du troisième écoulement (A2) à travers la conduite de distribution (DL) vers la région d'échange de chaleur (WJ).

3. Appareil de conditionnement selon la revendication 1 ou 2, dans lequel la conduite de distribution (DL) comprend une deuxième dérivation (DL4) raccordée à la conduite supplémentaire (AL) en amont du refroidisseur d'air de suralimentation (CAC) selon la direction du deuxième écoulement (B1) ;
et dans lequel ledit deuxième dispositif de régulation d'écoulement comprend un septième orifice (P8) communiquant sélectivement avec le quatrième et le cinquième orifice (P4, P7) pour permettre l'avancée d'au moins une deuxième partie de la somme du deuxième écoulement (B1 ; B1, C2) et du quatrième écoulement (B2 ; B2, C1) à travers la deuxième dérivation (DL4) vers la région d'échange de chaleur (WJ) ;
ledit deuxième dispositif de régulation d'écoulement étant configuré pour commander la dimension de la première et de la deuxième partie.

4. Appareil de conditionnement selon l'une quelconque des revendications précédentes, dans lequel la conduite de distribution (DL) comprend une deuxième dérivation (DL4) raccordée à la conduite supplémentaire (AL) en amont du refroidisseur d'air de suralimentation (CAC) selon la direction du deuxième écoulement (B1) et raccordant ladite première dérivation (DL2) à ladite région d'échange de chaleur (WJ) ;
ledit appareil comprenant un troisième dispositif de régulation d'écoulement, qui est défini par le deuxième dispositif de régulation d'écoulement et est configuré pour commander un cinquième écoulement (C1) du milieu de ladite première dérivation (DL2) à ladite deuxième dérivation (DL4) et un sixième écoulement (C2) du milieu de la conduite supplémentaire (AL1) à ladite deuxième dérivation (DL4).

5. Appareil de conditionnement selon l'une quelconque des revendications précédentes, dans lequel la conduite de distribution (DL) comprend une troisième dérivation (DL2) et un troisième dispositif de régulation d'écoulement (T3) configuré pour commander un cinquième écoulement (C1) du milieu à partir de la troisième dérivation (DL2) vers la région d'échange de chaleur (WJ) ;
ledit appareil comprenant une deuxième conduite de dérivation (AL3) qui raccorde la conduite supplémentaire (AL) à la troisième dérivation (DL2), de sorte que le milieu s'écoulant à travers la conduite supplémentaire (AL) puisse contourner ledit refroidisseur d'air de suralimentation (CAC) ;
dans lequel le troisième dispositif de régulation d'écoulement (T3) est en outre configuré pour commander un sixième écoulement (C2) du milieu à partir de la deuxième conduite de dérivation (AL3) vers la région d'échange de chaleur (WJ) ;
le troisième dispositif de régulation d'écoulement (T3) ayant un huitième orifice (P7) agencé pour recevoir le cinquième écoulement (C1) à partir de la troisième dérivation (DL2), un neuvième orifice (P9) agencé pour recevoir le sixième écoulement (C2) à partir de la deuxième conduite de dérivation (AL3), et un dixième orifice (P8) communiquant sélectivement avec le huitième et le neuvième orifice (P7, P9) pour permettre l'avancée de la somme du cinquième écoulement et du sixième écoulement (C1, C2) à travers la conduite de distribution (DL) vers la région d'échange de chaleur (WJ).

6. Appareil de conditionnement selon la revendication 4 ou 5, comprenant en outre un capteur (S5) connectable à un dispositif retardateur (RD) couplé au moteur (ICE) pour détecter si le dispositif retardateur est sous tension ou hors tension et une unité de commande (ECU) configurée pour
- acquérir des informations à partir du capteur pour déterminer si le dispositif retardateur est sous tension ;
- commander le troisième dispositif de régulation d'écoulement pour activer le sixième orifice (C2) lorsqu'il est déterminé que le dispositif retardateur (RD) est sous tension ;
- commander le deuxième dispositif de régulation d'écoulement pour bloquer l'écoulement du milieu de la troisième ouverture (02) au dispositif de refroidissement d'air de suralimentation (CAC) lorsqu'il est déterminé que le dispositif retardateur (RD) est sous tension.

7. Appareil de conditionnement selon la revendication 6, dans lequel l'unité de commande (ECU) est en outre configurée pour commander le troisième dispositif de régulation d'écoulement et/ou le premier dispositif de régulation d'écoulement pour bloquer respectivement le cinquième écoulement (C1) et/ou le premier écoulement (A1) lorsqu'il est déterminé que le dispositif retardateur (RD) est sous tension.

8. Procédé de commande d'un appareil de conditionnement selon la revendication 4 ou 5, le procédé comprenant :
- le fait de déterminer si un dispositif retardateur (RD) couplé au moteur (ICE) est sous tension ou hors tension ;
- la commande du troisième dispositif de régulation d'écoulement pour activer le sixième écoulement (C2) lorsqu'il est déterminé que le dispositif retardateur (RD) est sous tension ;
- la commande du deuxième dispositif de régulation d'écoulement pour bloquer l'écoulement du milieu de la troisième ouverture (02) au dispositif de refroidissement d'air de suralimentation (CAC) lorsqu'il est déterminé que le dispositif retardateur (RD) est sous tension.

9. Procédé selon la revendication 8, comprenant en outre
- la commande du troisième dispositif de régulation d'écoulement et/ou du premier dispositif de régulation d'écoulement pour bloquer respectivement le cinquième écoulement (C1) et/ou le premier écoulement (A1) lorsqu'il est déterminé que le dispositif retardateur (RD) est sous tension.
